Europäisches Patentamt

European Patent Office

Office européen des brevets

(11) Numéro de publication: **0 474 948 A1**

## DEMANDE DE BREVET EUROPEEN

(21) Numéro de dépôt: 90450011.3

(51) Int. Cl.5: **F16C 29/06**

(22) Date de dépôt: **10.09.90**

(43) Date de publication de la demande:
**18.03.92 Bulletin 92/12**

(84) Etats contractants désignés:
**AT BE CH DE DK ES FR GB IT LI LU NL SE**

(71) Demandeur: **Lecomte, Marc**
**9, rue Plaisance**
**F-33700 Merignac(FR)**

(72) Inventeur: **Lecomte, Marc**
**9, rue Plaisance**
**F-33700 Merignac(FR)**

(74) Mandataire: **Trolliet, Jean-Claude**
**Cabinet BURDIPAT 20, cours du Chapeau**
**Rouge**
**F-33000 Bordeaux(FR)**

(54) **Dispositif de guidage linéaire.**

(57) Dispositif de guidage linéaire comportant un chariot 2A doté de billes usinées (3) coulissant sur un profilé-guide se projetant longitudinalement, ledit chariot (2A) étant constitué par deux membres (222, 223) s'assemblant entre eux, le membre (222) présentant deux branches symétriques (227) sur chacune desquelles est aménagé un évidement symétrique (228) dont le fond (219) constitue une portion de chemin de roulement extérieur pour des billes mobiles (3), lesdits évidements (228) étant obturés par deux faces symétriques d'obturation (231) du second membre de chariot (223) prolongées chacune verticalement par une protubérance ou section de guidage (215) dont l'une des faces sert à compléter les chemins de roulement extérieurs ou gorges (209) des jeux de billes (3) et l'autre les chemins de roulement intérieurs ou gorges (208) en association avec les gorges du profilé-guide.

# Fig.1

EP 0 474 948 A1

La présente invention concerne un dispositif de guidage linéaire du type comportant un chariot à billes coulissant sur un profilé guide se projetant longitudinalement.

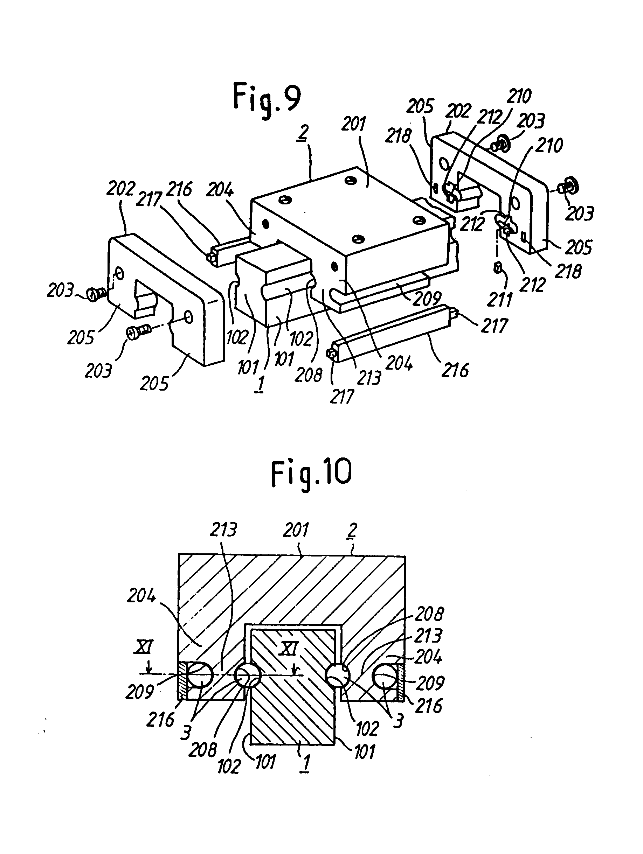

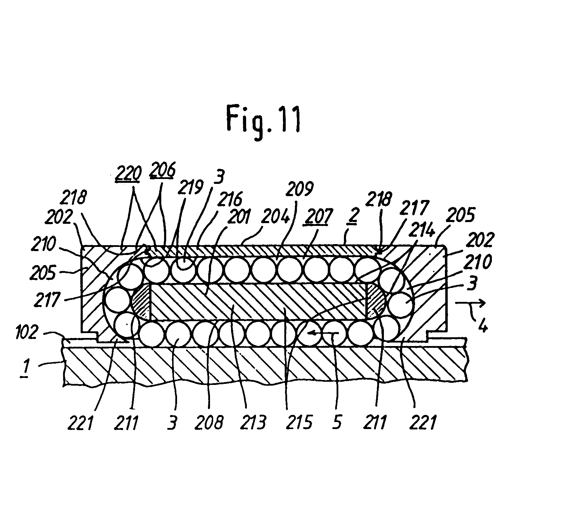

On connaît différents dispositifs de guidage et notamment celui décrit dans le brevet FR 2 573 142 (US 4,637,739) représenté sur les dessins joints figures 9, 10, 11 afin de bien faire ressortir les caractéristiques particulières dudit dispositif, où la figure 9 est une vue en perspective éclatée, la figure 10 une vue en coupe après assemblage et la figure 11 une vue en coupe selon l'axe XI-XI de la figure 10.

Sur ces dessins, le repère numérique 1 se rapporte à un profilé-guide se projetant longitudinalement équipé de pistes de roulement 102 se projetant dans le sens de la longueur sur les côtés opposés 101 dudit profilé-guide et le repère numérique 2 se rapporte à un chariot coulissant se déplaçant le long du profilé-guide 1. Le dispositif de guidage linéaire est utilisé dans un grand nombre d'applications comme par exemple la commande du positionnement d'outils montés sur le chariot coulissant 2, le transfert d'éléments placés sur le chariot coulissant 2, etc. Le chariot coulissant 2 se compose d'un corps de chariot 201 et de deux pièces rapportées d'extrémités 202 fixées sur le corps de chariot 201 au moyen de vis 203. Le corps de chariot 201 comprend deux sections en forme d'aile 204, ainsi que les pièces rapportées d'extrémité 202, deux sections en forme d'aile 205 correspondant à la section respective en forme d'aile 204 du corps 201, lesdites sections en forme d'aile 204 et 205, aprés fixation des pièces rapportées d'extrémité 202 sur le corps de chariot 201, constituent les sections en forme d'aile droite et gauche 206 (figure 11) du chariot coulissant 2.

Le repère numérique 3 fait référence à un certain nombre de billes et dans chacune des sections en forme d'aile 206 du chariot coulissant 2 est usinée une gorge de guidage sans fin 207 pour billes 3 (figure 11) dans laquelle les billes 3 sont insérées. Chaque gorge de guidage 207 sans fin pour billes 3 comporte une gorge de roulement linéaire 208 pour billes 3 disposée de manière adjacente et opposée à ladite piste de roulement 102 de chaque côté 101 du profilé-guide 1, une gorge ou piste de retour 209 des billes 3 disposées en opposition ou constituant un élément à deux gorges avec la gorge de roulement linéaire 208 pour billes 3 et la gorge de déplacement 210 des billes 3 reliant les extrémités opposées de la gorge de roulement linéaire 208 pour billes 3 aux extrémités correspondantes de la gorge ou piste de retour 209 des billes 3. Les gorges 208 et 209 sont incorporées dans le corps du chariot 1, tandis que les gorges 210 sont usinées dans les pièces rapportées d'extrémité 202. De plus, dans chacune des pièces d'extrémité 202 des évidements en demi-lune 212 sont disposés au-dessus et au-dessous de la gorge de déplacement 210 des billes 3 et forment un angle droit avec ladite gorge de déplacement des billes.

Le repère numérique 211 se rapporte à des tenons à section en demi-lune qui viennent s'ajuster dans les évidements ou chambres 212 disposés dans chaque pièce rapportée d'extrémité 202 et qui en coopération avec une section en forme d'âme 213 de chaque section en dorme d'aile 204 du corps de chariot 1, constituent une gorge de guidage intérieure 215 qui à son tour définit une face de gorge de guidage intérieure 214 de la gorge de roulement linéaire 208 pour billes 3, la gorge ou piste de retour 209 des billes 3 et la gorge de déplacement 210 des billes 3. Le repère numérique 216 se rapporte aux membres d'obturation qui obturent les gorges ou pistes de retour 209 des billes 3 de chaque section en forme d'aile 206 par l'extérieur, lesdits membres d'obturation 216 sont maintenus en position d'obturation par les tenons projetés 217 situés à chaque extrémité desdits membres d'obturation 216 et les pièces rapportées d'extrémité 202 se rejoignent pour former une section de guidage extérieure 220 qui à son tour définit une face de section de guidage extérieure 219 (figure 11) de la gorge ou piste de retour 209 des billes 3 et de la gorge de déplacement 210 des billes 3. Les billes 3 sont insérées en les faisant rouler entre les gorges de roulement 102 pour billes 3 du profilé-guide 1 et les gorges de roulement linéaire 208 pour billes 3 du chariot coulissant 2, dans les gorges ou pistes de retour 209 des billes 3 et dans les gorges de déplacement 210 des billes 3.

Le chariot coulissant 2 est monté à cheval sur le profilé-guide 1 comme le montre la figure 10. Le numéro de repère 221 se rapporte à des sections de piste de roulement formant un volume de roulement faisant partie intégrante des pièces rapportées d'extrémité 202 et se projetant dans les gorges de roulement 102 du profilé-guide 1 permettant de guider les billes 3 se trouvant dans les gorges 102 vers les gorges de déplacement 210 des billes 3 et vice versa.

Lors du déplacement du chariot coulissant 2 en direction de la flèche 4 représentée figure 11, les billes 3 disposées en appui entre les pistes de roulement 102 du profile-guide 1 et les gorges de roulement linéaire 208 pour billes 3 du chariot coulissant 2 se déplacent le long des gorges 208 selon le sens de la flèche 5 et sont prises en charge par les sections de piste de roulement 221 pour être guidées dans les gorges de déplacement 210 des billes 3 des pièces rapportées d'extrémité 202. Ce fonctionnement est semblable à celui qui a été décrit ci-dessus lorsque le chariot coulissant 2 se déplace en direction opposée à la flèche 4. De ce fait le chariot coulissant 2 peut se déplacer le long du profilé-guide 1 en ne rencontrant que des résistances extrémement faibles.

Comme décrit le chariot coulissant du dispositif est constitué d'un nombre important de pièces ce qui engendre un temps de montage nécessairement long, un coût de production élevé pour une précision du produit final relative due au fait de la multiplication du nombre de tolérances différentes attachées au grand nombre de pièces.

L'invention a pour but de pallier aux inconvénients précédemment exposés et permet d'obtenir un dispositif de guidage et notamment un chariot coulissant sur un profilé guide se projetant longitudinalement constitué par un nombre de pièces réduit permettant de diminuer les coûts de production et de montage tout en présentant un degré de précision élevé.

L'invention a pour objet un dispositif de guidage linéaire et notamment un chariot coulissant sur un profilé guide se projetant longitudinalement constitué par deux membres s'assemblant entre eux, un premier membre étant constitué par deux branches symétriques gauche et droite dont les extrémités de chacune d'elles sont reliées à l'extrémité correspondante de l'autre, sur chacune des branches est aménagé un évidement symétrique se projetant dans le sens de la longueur dont le fond constitue une portion de chemin de roulement extérieur pour des billes mobiles, les évidements en leur extrémité présentent une forme arrondie pour permettre le recyclage desdites billes durant le déplacement du chariot, le second membre du chariot présente deux faces symétriques d'obturation des parties supérieures des évidements du premier membre, lesdites faces sont reliées entre elles et leurs faces d'obturation sont prolongées chacune de manière verticale par une protubérance ou section de guidage se projetant dans le sens de la longueur, lesdites protubérances destinées à être contenues dans les évidements du premier membre lors de leur assemblage ont leurs faces latérales qui servent l'une à compléter les chemins de roulement extérieurs des jeux de billes et l'autre les chemins de roulement intérieurs en association avec les gorges du profilé-guide, le deuxième membre étant réalisé en matériaux de grande rigidité.

D'autres caractéristiques et avantages de l'invention ressortiront plus clairement de la description qui va suivre faite en regard des dessins joints donnés à titre d'exemple non limitatif, où :

- la figure 1 est une vue en coupe d'un dispositif de guidage linéaire,
- la figure 2, une vue en perspective du second membre d'un chariot, selon une rotation à 180°,
- la figure 3, une vue en perspective du premier membre d'un chariot,
- la figure 4 représente une variante de réalisation du second membre d'un chariot,
- la figure 5, un premier membre du chariot conforme à la variante du second membre représenté figure 4,
- les figures 6, 7 et 8, des variantes de réalisation des formes de gorges ou chemins de roulement des sections de guidage intérieures et extérieures.

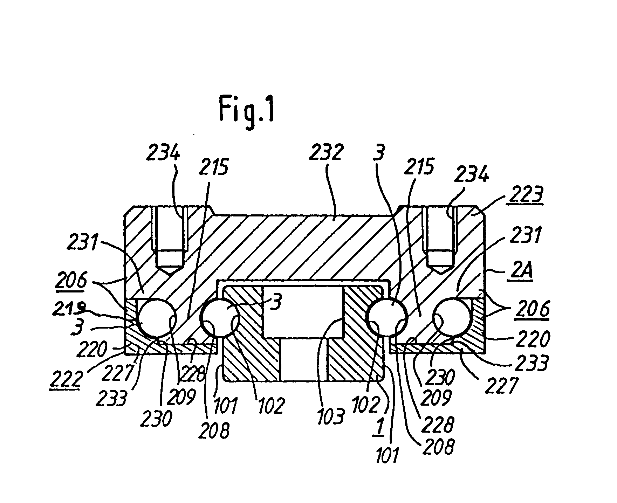

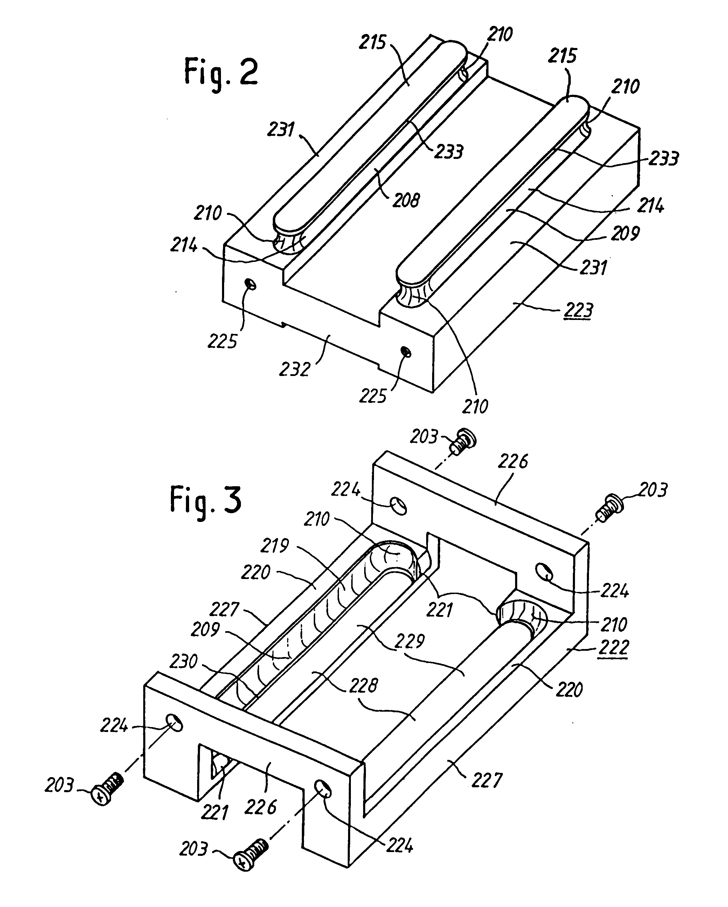

Tel que représenté figures 1 à 3, le repère alphanumérique 2A désigne le chariot coulissant qui se compose d'un premier membre de chariot 222 et d'un second membre de chariot 223, ces deux membres de chariot 222 et 223 sont assemblés et fixés l'un à l'autre au moyen des vis 203 qui se vissent dans les alésages taraudés 225 usinés dans le second membre de chariot 223 au travers des trous lisses 224 usinés dans le premier membre de chariot 222. Lorsqu'il est assemblé de cette manière, le second membre de chariot 223 subit une rotation à 180° par rapport à la position qu'il occupe sur la figure 2.

Le premier membre de chariot 222 se compose de deux branches symétriques droite et gauche 227 reliées entre elles intégralement par l'intermédiaire des sections en forme de pontet 226 à leurs extrémités opposées et les sections en forme de branche 227 ont chacune une section de guidage extérieure 220 qui correspond à la section respective en forme d'aile 206 du chariot coulissant 2A. Les sections de guidage extérieures 220 sont équipées chacune d'un évidement 228 s'étendant dans le sens de la longueur qui définit la face de gorge de guidage extérieure 219 ou portion de chemin de roulement de la gorge ou piste 209 de retour des billes 3 et de la gorge de déplacement 210 desdites billes. Les sections de la face de gorge de guidage extérieure 219 qui forment les gorges 210 de déplacement des billes sont chacune en forme d'arc pour permettre de guider doucement les billes 3. Pour des raisons qui seront développées dans un des paragraphes suivants un épaulement 230 a été usiné entre la face de gorge de guidage extérieure 219 et une face inférieure 229.

D'autre part, le second membre de chariot 223 est équipé de deux membres d'obturation droit et gauche 231 qui obturent la partie supérieure des évidements 228 du premier membre de chariot 222 après assemblage comme le montre la figure 1. Ces membres d'obturation 231 sont reliés intégralement entre eux par la section intermédiaire 232. Les sections de guidage intérieures 215 ou protubérances définissant les faces de gorge de guidage intérieures 214, les gorges de roulement linéaire 208 pour billes, les gorges ou pistes 209 de retour de billes et les gorges de déplacement 210 des billes forment partie intégrante des membres d'obturation 231 du second membre de chariot 223 pour venir s'ajuster dans les évidements 228 usinés sur le premier membre de chariot 222, les extrémités opposées de chaque section de guidage intérieure 215 forment un arc pour guider trés doucement les billes 3 le long des gorges de déplacement 210 des billes. Sur chaque section de guidage intérieure 215 est usiné un épaulement 233 adapté pour pouvoir s'engager dans l'épaulement 230 de l'évidement 228 du premier membre de chariot 222 aprés assemblage comme le montre la figure 1. Le second membre de chariot 223 est fabriqué entièrement à partir d'un matériau à haute rigidité (par exemple acier, céramique, etc) pouvant supporter la charge d'éléments tels que des outils d'usinage montés sur le chariot coulissant 2A, le repère numérique 103 désigne un alésage devant recevoir un boulon non représenté sur les dessins permettant de fixer le profilé-guide 1 à l'ensemble du bâti non représenté sur les dessins et le repère numérique 234 se rapporte à un alésage recevant un boulon de montage de l'outil d'usinage ou de tout autre élément, sur le chariot glissant 2A.

Pour le montage du chariot coulissant 2A, le second membre de chariot 223 subit une rotation à 180° par rapport à la position qu'il occupe sur la figure 2 et les épaulements 233 des sections de guidage intérieures 215 viennent butter contre les épaulements 230 des évidements 228 du premier membre du chariot 222 et ensuite le premier et le second membre de chariot 222 et 223 sont fixés l'un à l'autre au moyen de vis 203. Lorsqu'elles sont assemblées de cette manière, les gorges de guidage sans fin pour billes 3 qui comportent les gorges de roulement linéaire 208 pour billes, les gorges ou pistes de retour 209 des billes et les gorges de déplacement 210 des billes sont définies par les faces des gorges de guidage intérieures 214 des sections de guidage intérieures 215 du second membre de chariot 223 et les faces de section de guidage extérieures 219 des sections de guidage extérieures 220 du premier membre de chariot 222.

Comme il a été décrit ci-dessus, le chariot coulissant 2A du dispositif de guidage linéaire, conformément à la présente invention, est constitué uniquement de deux parties, c'est-à-dire le premier membre de chariot 222 et le second membre de chariot 223, de sorte que le nombre de pièces et de phases du montage se trouve réduit substantiellement et par conséquent le chariot coulissant 2A peut être assemblé trés facilement à un moindre coût. De plus la dégradation de la précision provoquée par l'accumulation des tolérances différentes appliquées aux divers éléments est éliminée dans une très grande mesure en raison de la réduction du nombre des pièces. De plus les billes 3 sont guidées trés doucement en raison du fait que la section de guidage intérieure 215 est monobloc. Le premier membre de chariot 222 ne supporte pas la charge des éléments montés ou placés sur le chariot coulissant 2A de sorte qu'il peut être fabriqué par moulage dans un matériau de moulage comme de la résine synthétique ou de l'aluminium dont le coût est bien moindre par rapport au coût trés élevé du matériau à trés grande rigidité dont est fait le second membre de chariot 223, ce qui a pour effet de réduire encore plus le coût dudit dispositif.

Pour pouvoir monter le chariot coulissant 2A entièrement assemblé sur le profilé-guide 1, le chariot coulissant 2A est partiellement inséré à une extrémité du profilé-guide 1, le chariot coulissant 2A est ensuite progressivement inséré sur le profilé-guide tandis que l'on introduit les billes 3 dans les gorges de guidage sans fin pour billes au travers des gorges de roulement linéaire 208 pour billes.

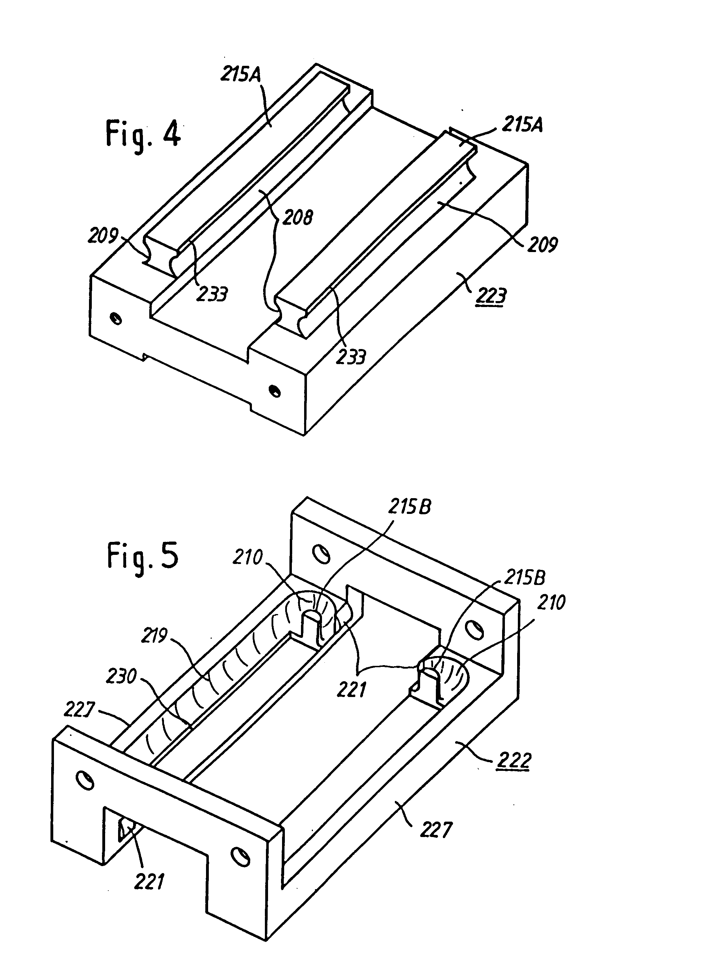

Selon les variantes représentées figures 4 et 5, la pièce 215A de la section de guidage intérieure qui définit la face de gorge de guidage intérieure de la gorge de roulement linéaire 208 pour billes et supporte la charge est reliée intégralement au second membre de chariot 223, les pièces 215B qui définissent les faces de gorge de guidage intérieures des gorges de déplacement 210 des billes qui ne supportent pas, ou presque pas, de charge font partie intégrale du premier membre de chariot 222. Selon la présente incorporation de l'invention, à l'exception du fait qu'il faille maintenir la continuité de la face de la gorge de guidage intérieure à la jonction des pièces 215A et 215B pour assurer un guidage doux des billes 3, l'invention présente en plus des avantages que procure l'incorporation de l'invention représentée par les figures 1 à 3, un avantage supplémentaire en ce sens que lesdites pièces 215B peuvent faire partie intégrale du premier membre de chariot 222 par moulage, alors que dans l'incorporation de l'invention représentée figures 1 à 3, les pièces 215B doivent avoir une configuration curviligne, par usinage d'un matériau à trés grande résistance comme l'acier ou la céramique par exemple.

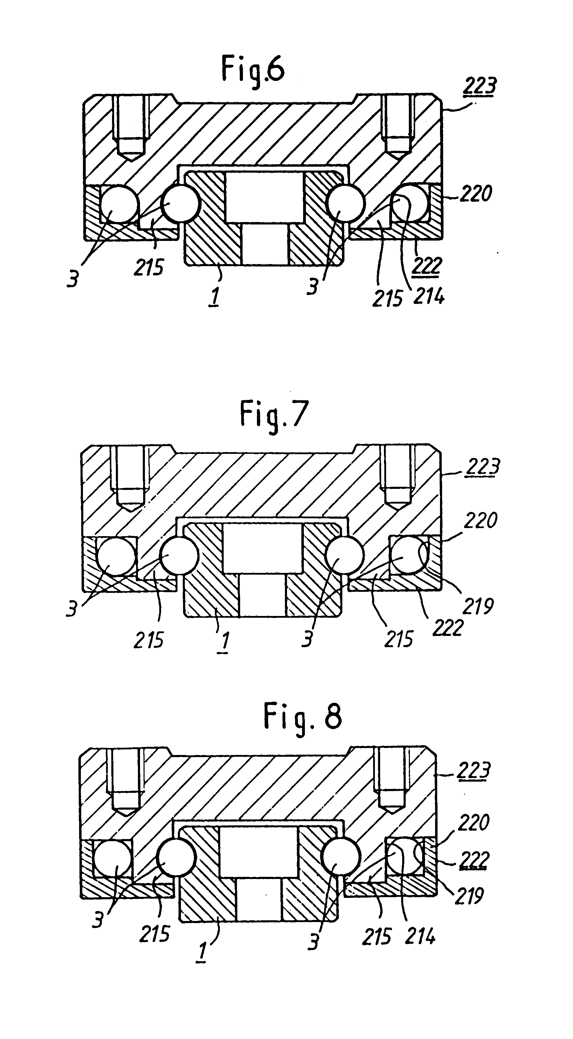

Dans l'incorporation représentée figures 1 à 3, les faces de section de guidage intérieures 214 des sections de guidage intérieures 215 et les faces de section de guidage extérieures 219 des sections de guidage extérieures 220 sont arrondies de façon à épouser la courbure des billes 3, une telle configuration est préférable, du fait que les formes curvilignes ont pour effet de réduire les tensions de friction ce qui par répercussion réduit les risques de détérioration des sections de guidage intérieures et extérieures 215 et 220, toutefois le fait que seule la face de section de guidage intérieure 214 de la section de guidage intérieure 215 est usinée de manière curviligne, on évite la création d'une tension excessive dans les sections de guidage intérieures 215 qui supportent la charge et la configuration des sections de guidage extérieures 220 est simplifiée, comme représenté figure 6. Selon la figure 7, seules les faces de section de guidage extérieures 219 des sections de guidage extérieures 220 sont arrondies, dans ce cas d'espèce la configuration des sections de guidage intérieures 215 est simplifiée et on évite de faire supporter des tensions excessives aux sections de guidage extérieures 220. A la figure 8, les faces de section de guidage intérieures 214 des sections de guidage intérieures 215 et les faces de section de guidage extérieures 219 des sections de guidage extérieures 220 ne sont pas arrondies et forment un angle droit, dans ce cas précis cependant, bien que les tensions soient concentrées dans cette zone de jonction à angle droit, la configuration des sections de guidage intérieures et extérieures 215 et 220 est simplifiée et ses parties peuvent être facilement usinées, de sorte que ce genre de construction convient aux applications pour lesquelles ladite charge est légère et les tensions sont faibles.

Selon la présente invention faisant l'objet de la description ci-dessus, le chariot coulissant est constitué de deux parties, c'est-à-dire un premier et un second membre de chariot, de sorte que le nombre de pièces et de phases de montage est diminué de manière substantielle par rapport au dispositif conventionnel et que par conséquent le dispositif de guidage linéaire peut être fabriqué en peu de temps, à un coût moindre et présente un degré élevé de précision.

De plus en moulant le premier membre de chariot dans un matériau de moulage, le coût peut être réduit encore plus.

En incorporant intégralement les sections de guidage intérieures au second membre de chariot, on obtient un guidage uniforme et trés doux des billes.

En arrondissant les faces de section de guidage intérieures des sections de guidage intérieures de façon à ce qu'elles épousent le profil curviligne des billes, on évite la formation de tensions excessives sur les sections de guidage intérieures.

De plus en donnant une forme curviligne aux faces de section de guidage extérieures des sections de guidage extérieures de façon à ce qu'elles épousent le profil curviligne des billes, on évite de créer des tensions excessives dans les sections de guidage extérieures.

**Revendications**

1. Dispositif de guidage linéaire du type comportant un profilé-guide se projetant de manière longitudinale équipé de pistes de roulement pour billes usinées de part et d'autre de l'axe longitudinal sur lequel chevauche et est maintenu un chariot coulissant doté de billes circulant lors du déplacement du chariot dans des gorges sans fin, caractérisé en ce que le chariot coulissant (2A) est constitué par deux membres (222, 223) s'assemblant entre eux, un premier membre (222) étant constitué par deux branches symétriques gauche et droite (227) dont les extrémités de chacune d'elles sont reliées à l'extrémité correspondante de l'autre, sur chacune des branches (227) est aménagé un évidement symétrique (228) se projetant dans le sens de la longueur dont le fond (219) constitue une section de gorge de guidage extérieure ou une portion de chemin de roulement extérieur pour des billes mobiles (3), les évidements (228) en leur extrémité présentent une forme ou gorge arrondie (210) pour permettre le recyclage desdites billes durant le déplacement du chariot (2A), le second membre du chariot (223) présente deux faces symétriques d'obturation (231) des parties supérieures des évidements (228) du premier membre (222), lesdites faces sont reliées entre elles et leurs faces d'obturation (231) sont prolongées chacune de manière verticale par une protubérance ou section de guidage (215) se projetant dans le sens de la longueur, lesdites protubérances (215) destinées à être contenues dans les évidements (228) du premier membre lors de leur assemblage ont leurs faces latérales qui servent l'une à compléter les chemins de roulement ou gorges (209) extérieurs des jeux de billes (3) et l'autre les chemins de roulement intérieurs ou gorges (208) en association avec les gorges du profilé-guide, le deuxième membre étant réalisé en matériaux de grande rigidité.

2. Dispositif de guidage linéaire selon la revendication 1 caractérisé en ce que le premier membre (222) du chariot coulissant (2A) est réalisé par moulage dans un matériau moulable.

3. Dispositif de guidage linéaire selon la revendication 1 caractérisé en ce que les sections de guidage ou protubérances (215) font partie intégrante du second membre (223).

4. Dispositif de guidage linéaire selon les revendications 1 et 3 caractérisé en ce qu'en leurs extrémités les protubérances ou sections de guidage (215) présente une face de gorge (210) en forme d'arc solidaire de la section (215).

5. Dispositif de guidage linéaire selon la revendication 1 caractérisé en ce que aux extrémités des sections de guidage ou protubérances (215) les faces de gorges (210) sont aménagées sur des pièces (215B) faisant partie intégrante du premier membre (222), les sections de guidage ou protubérances (215) s'insérant et se profilant entre les pièces (215B) lors du montage des membres (222, 223).

6. Dispositif de guidage linéaire selon la revendication 1 caractérisé en ce que la forme des gorges de guidage (214) du deuxième membre (223) et (219) du premier membre (222) est variable, tel que les gorges (214, 219) présentent une forme arrondie pour épouser la forme des billes, la gorge (214) une forme arrondie et (219) une forme en angle droit, la gorge (214) en angle droit, la gorge (219) arrondie, les gorges (214, 219) une forme en angle droit.

# Fig.1

Fig. 2

Fig. 3

Fig. 4

Fig. 5

## Fig.6

## Fig.7

## Fig. 8

## Fig.9

## Fig.10

# Fig.11

# Office européen des brevets

## RAPPORT DE RECHERCHE EUROPEENNE

Numéro de la demande

**EP 90 45 0011**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.5) |
|---|---|---|---|
| Y | EP-A-0 379 827 (LECOMTE) <br> * Colonne 4, lignes 38-50; colonne 4, ligne 58 - colonne 5, ligne 12; colonne 5, lignes 25-37; figures 3,4,8,9,14-16 * <br> – – – | 1-3,5 | F 16 C 29/06 |
| Y | DE-A-3 128 628 (HEPHAIST SEIKO CO.) <br> * Page 5, lignes 4-32; page 8, dernier paragraphe; figures 4-12 * <br> – – – | 1-3,5 | |
| A | FR-A-2 402 106 (TERAMACHI) <br> * Page 4, ligne 34 - page 5, ligne 2; page 5, lignes 20-34; figures 1,4A,4B * <br> – – – | 1,2 | |
| A | EP-A-0 164 540 (TSUBAKIMOTO PRECISION PRODUCTS CO., LTD) <br> * Pae 13, ligne 21 - page 14, ligne 14; figure 30 * <br> – – – | 1 | |
| A | EP-A-0 318 980 (TSUBAKIMOTO PRECISION PRODUCTS CO., LTD) <br> – – – – – | | |

**DOMAINES TECHNIQUES RECHERCHES (Int. Cl.5)**

F 16 C
B 23 Q

**Le présent rapport de recherche a été établi pour toutes les revendications**

| Lieu de la recherche | Date d'achèvement de la recherche | Examinateur |
|---|---|---|
| La Haye | 08 mai 91 | GUTHMULLER J.A.H. |

CATEGORIE DES DOCUMENTS CITES
X : particulièrement pertinent à lui seul
Y : particulièrement pertinent en combinaison avec un autre document de la même catégorie
A : arrière-plan technologique
O : divulgation non-écrite
P : document intercalaire
T : théorie ou principe à la base de l'invention

E : document de brevet antérieur, mais publié à la date de dépôt ou après cette date
D : cité dans la demande
L : cité pour d'autres raisons

 

& : membre de la même famille, document correspondant